# EUROPEAN PATENT SPECIFICATION

(11) **EP 1 849 632 B1**
(45) Date of publication and mention of the grant of the patent: **07.04.2010**
(21) Application number: 07107069.2
(22) Date of filing: 26.04.2007
(51) Int. Cl.: B60D 1/04

(54) **Coupler jaw intended for the three-point coupling of a tractor**
Kupplungsscharnier zur Verwendung in der Dreipunkt-Kupplung eines Traktors
Pince pour le couplage sur trois points d'un tracteur

(30) Priority: 27.04.2006 FI 20065271
(43) Date of publication of application: 31.10.2007
(73) Proprietor: LH Lift Oy, 41370 Kuusa (FI)
(72) Inventor: Viikki, Paavo, 41370, KUUSA (FI)
(74) Representative: Helke, Kimmo Kalervo

(56) References cited:
- EP-A1- 0 523 332
- EP-A1- 1 522 429
- EP-A1- 1 532 854
- EP-A1- 1 604 558
- DE-A1- 10 120 059
- DE-C1- 4 235 780
- US-A- 4 071 263

## Description

The present invention relates to coupler jaw, which is of a type according to the preamble to Claim 1, for the three-point coupling of a tractor. In a simplified form, the coupler jaw belongs to the group, in which the catch and the operating lever pivoted to it can move guided by the surfaces of the housing and the locking force of the catch is directed through the operating lever to the housing. This group differs from coupler jaws, in which the catch, the operating lever, or an auxiliary arm pivoted to them is in turn pivoted to the housing, and from those in which only the catch takes care of the basic locking, with the aid of its locking surfaces and the counter surfaces of the housing.

Patent publication US 4,157,838 (DE 2645479) discloses a coupler jaw according to the preamble of claim 1. The catch and operating lever are pivoted mutually and their mutual rotation further than a selected limit is prevented. A spring is connected to the lower part of the operating lever to pull the catch into the locking position, this always being implemented in the same way on account of the aforementioned rotation prevention. However, vibration and the associated wear can create problems in such a solution. Because the actual locking surface in the operating lever is short, even a small initial movement can dislocate the locking.

US publication 5,497,835 discloses a coupler jaw, in which the entire locking is based directly on the locking surfaces in the catch, and the operating lever is of no significance in the basic locking. However the operating lever is used to lock the catch entirely out of use.

Publication EP1532854 discloses a coupler jaw, in which the catch is forced against the said opening force, and relative to the pin of the housing, into a set path, which pushes the operating lever to a full lock, when the hole in it presses against the pin of the housing. The operating lever cannot be pulled open along this path, but instead must be lifted over the said pin. The actual opening direction of the operating lever is thus different from this 'full lock' direction.

The present invention is intended to eliminate the defects of the prior art, without, however, compromising either the good locking of catch against the opening force of the coupler ball in the locking position, or the ease of the automatic locking. The characteristic features of the coupler jaw according to the invention are stated in the accompanying Claim 1. According to one preferred embodiment, the rotation of the operating level is prevented with the aid of the support surfaces in it. Another possibility is to arrange limiter surfaces for the catch and the operating level, which thus transfer the opening force to the operating lever, of course jointly with the pivot.

In the following, the invention is examined with the aid of examples, which are shown in the accompanying drawings.
- Figure 1: shows the coupler jaw with the catch fully locked in the path of the coupler ball
- Figure 2: shows the coupler jaw with the operating lever slightly raised and the catch thus slightly opened
- Figure 3: shows the coupler jaw with the operating lever raised and the catch thus fully opened
- Figure 4: shows the coupler jaw with the operating lever raised permanently to the upper position and the catch taken out of use
- Figure 5: shows a second coupler jaw with the catch fully locked in the path of the coupler ball.

In the figures, the coupler jaw according to the invention is shown without the cover, which in the end product is welded onto the coupler jaw. In addition, the coupler jaw is shown smaller than it is in reality.

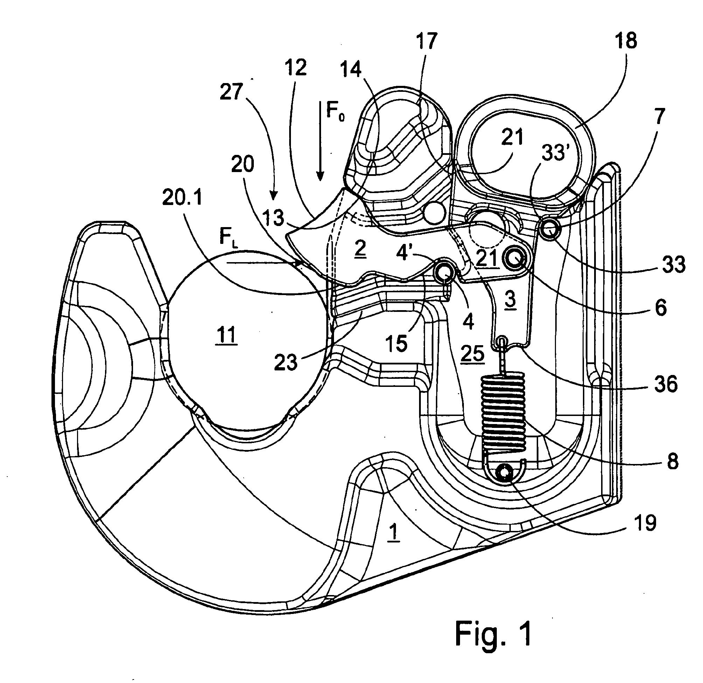

The coupler jaw itself is also attached to the drawbar by welding. The coupler jaw includes a body 1 manufactured by forging, in which there is a coupler throat 27 and a housing 25, Figure 1. The coupler throat 27 is conventional and is arranged to receive particularly a coupler ball 11. Usually, the coupler ball is installed permanently on the implement to be coupled or else it is installed on the pin of a conventional three-point coupling. As such, a quick-release coupling can be made even without a coupler ball, but this is, however, not recommended. In addition, with the aid of a coupler ball possible small differences in angle between the pin and the drawbar are eliminated. In the figures, the coupler ball is marked with the reference number 11.

The locking mechanism comprises a catch 2, an operating lever 3 pivoted to it, and a spring 8, one end of which is attached to a pin 19 in the bottom part of the housing and the other end to the lower end of the operating lever 3, in such a way that it pulls the catch 2 into the locking position.

The catch 2 includes pivot lugs 2.1, to which the pivot pin 6 is attached. The catch 2 is supported on all sides at least partly by the coupler jaw and, through the pivot pin 6, by the operating lever 3. The catch 2 protrudes from the housing 25 into the coupler throat 27, from an opening between the edge surfaces 13 and 23. The actual direct load is carried by the edge surface 13, when the coupler ball 11 presses on the locking surface 20 of the catch 2, and is then transmitted through the upper surface 14 to the said edge surface 13.

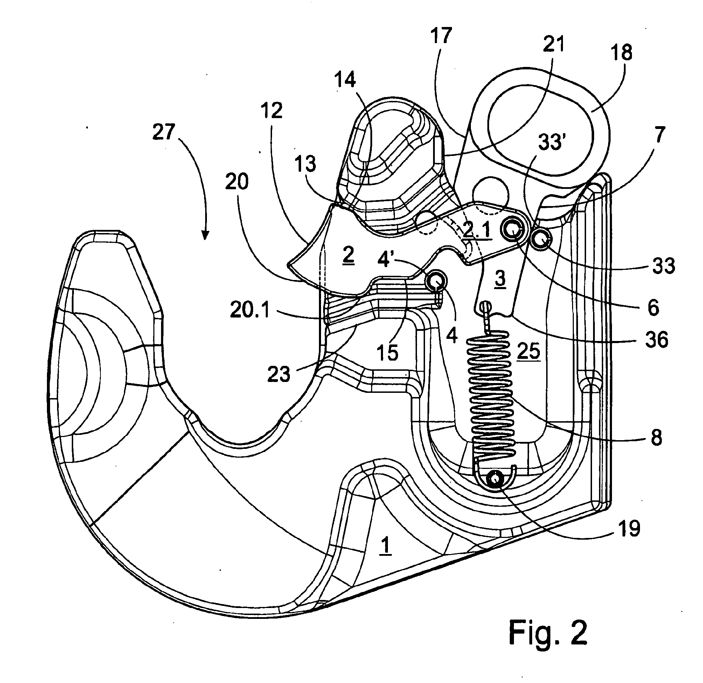

In the locking position, the catch 2 is supported by its bottom surface 15 on the counter surface 4' of the pin 4. The movement of the catch 2 is limited, not only by the aforesaid pair of surfaces, but also by the guide surfaces of the operating lever 3, which are the counter surface 21 opposite the support surface 17 on the catch 2 side, close to the upper opening, and, slightly lower down on the counter surface 33' in the pin 33, opposite the support surface 7. In this embodiment, it is essential for the support surface 21 to be higher than the support surface 33' and further for it to be higher than the pivot pin 6, so that the operating lever 3 cannot rotate and the opening forces F_{L} parallel to the catch 2 will be mainly directed against the surface 33' of the pin 33. Because the support surface 7 continues in the same way downwards for a considerable distance, this locking tactic is retained until the pivot pin 6 rises to the height of the pin 33, Figure 2. This is about 45 % of the opening travel required by the operating lever 3 to free the coupler ball in this example. This portion is preferably more than 30 % and generally at least 15 %. This required opening travel is specifically part of the actual opening path of the operating lever.

In the initial stage of the automatic opening operation (when the coupler ball 11 presses the opening surface 12), the catch 2 rotates around the pin 4, until the bottom surface 20.1 of the catch meets the lower edge 23 of the opening, when a new centre point of rotation is formed and the operating lever 3 rises due to both rotation of the catch and sliding.

A small amount of rotation of the catch 2 also takes place in normal opening when the operating lever 3 is raised to the situation in Figure 2. At first, the catch 2 rotates around a point on the top support surface 14, sliding only a very short distance. For this purpose, the areas near the locking surface 20 form a curved profile, which is able to rotate the coupler ball 11, if it is in the coupler throat. After that, the catch slides along the surfaces 13 and 23 at the same time as the operating lever slides out of the opening between the surfaces 21 and 33' (pin 33).

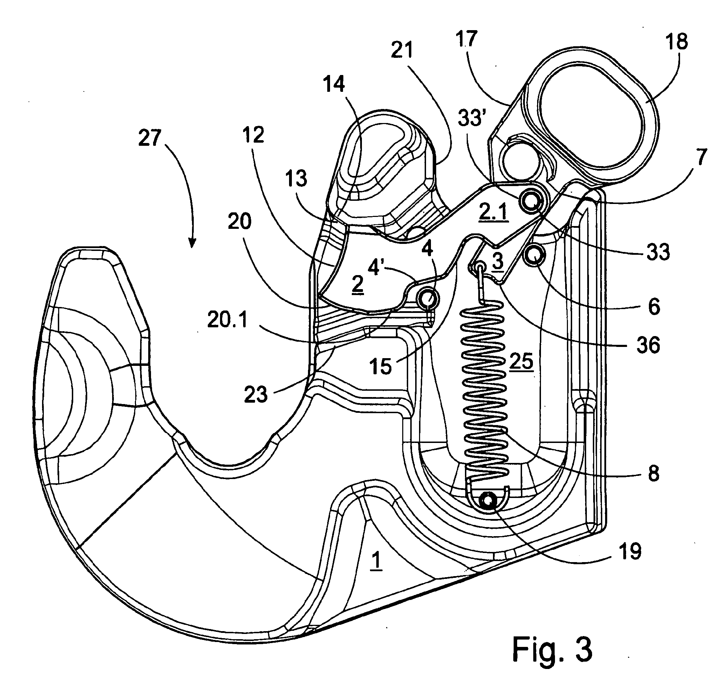

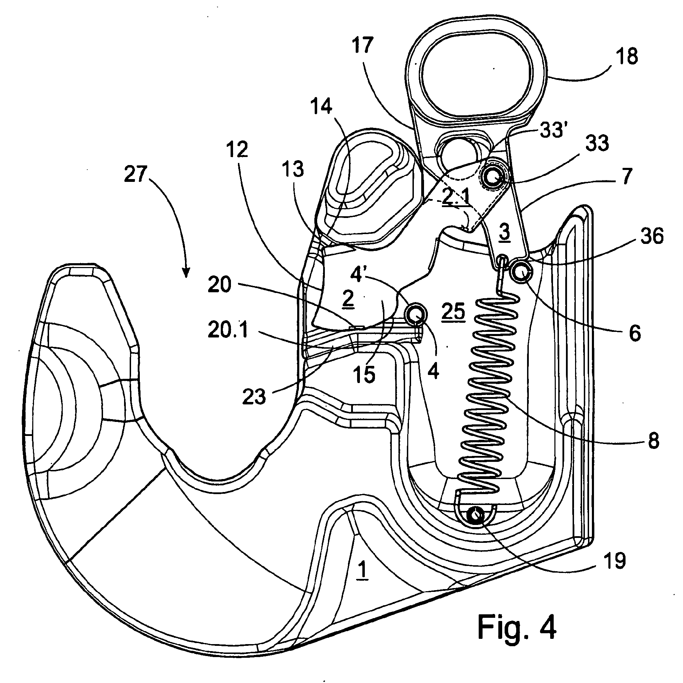

In Figure 3, the operating lever 3 has already been raised more than enough to release the coupler ball 11. If the lifting is continued slightly and the operating lever 3 rotated in the direction of the coupler housing, the bottom surface 36 of the operating lever 3 can be lifted on top of the pin 33, which gives this pin 33 another purpose too, Figure 4.

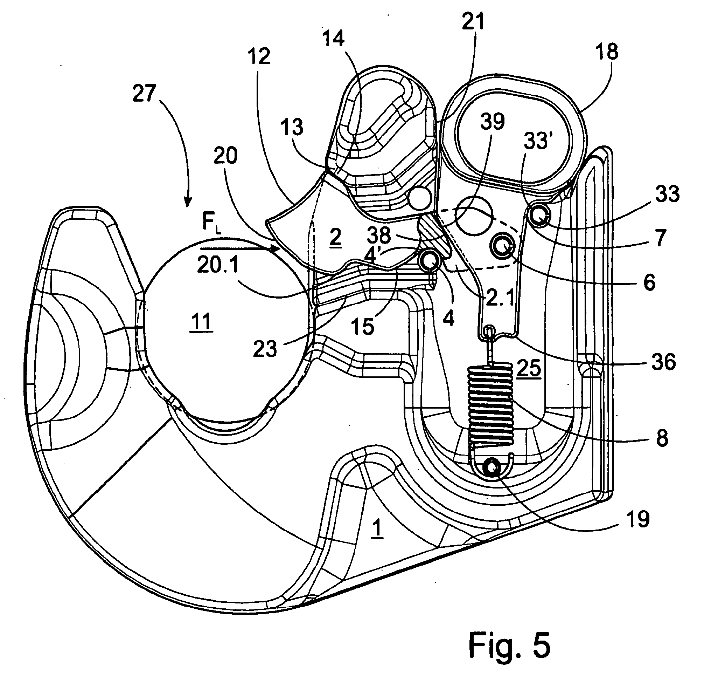

Figure 5 shows an embodiment differing slightly from the above. In terms of dimensioning, the entire coupler jaw can be, in fact, nearly identical. However, by means of small differences in the catch and operating lever a clear functional difference is created. The same reference numbers as above as used for components that are functionally similar. In this case, only the side of the edges of the upper opening of the operating lever that is opposite to the catch is of significance, i.e. where the support surface 7 of the operating lever 3 meets the counter surface 33' of the pin 33. In this case, the rotation of the operating lever 3 is prevented by the mutual locking of the catch 2 and the operating lever 3. Here too the catch 2 includes pivot lugs 2.1, to which the pivot pin 6 is attached (in the figure the uppermost pivot lug is shown cut away). However, the bottom surface 39 of the pivot lugs has now been dimensioned in such a way relative to the counter surface 38 of the operating lever 3 that, when the operating lever rotates, they make contact before the operating lever 3 makes contact with the edge of the upper opening further up on the same side. The moment preventing rotation arises from the forces travelling through these surfaces 38 and 39, as well as through the pivot pin 6. Thus the opening force F_{L} of the coupler ball is directed to the pin 33 of the housing, in the same way as above.

## Claims

1. Coupler jaw for the three-point coupling of a tractor, particularly for a drawbar, the coupler jaw comprising a coupler throat (27), a housing (25), a catch (2), and a spring (8) arranged to pull the catch (2) towards the locking position, as well as an operating lever (3), which protrudes partly from an upper opening of the housing (25), and which coupler jaw secures the coupler ball (11) of an implement or similar device in its coupler throat (27) and locks it by means of the said catch (2), which extends from an opening of the housing (25) to the coupler throat and which can be pushed into the housing (25) when the coupler ball (11) presses (force Fₒ) an opening surface (12) of the catch (2) protruding from the opening of the housing, but in which the catch in the locking situation is prevented from opening by the effect of the tangential force (F_{L}) of the coupler ball (11) in the coupler throat (27), and in which the catch (2) is arranged to be opened manually by means of the operating lever (3), and in which the catch (2) and the operating lever (3) pivoted to it operate relative to the housing (25) with the aid of operating surfaces, which are in the locking position
- a locking surface (20) against the ball (11) on the catch side facing the coupler throat (27), and
- a support surface (13) on the upper side of the opening of the housing and a sliding top surface (14) of the catch (2), and
- a support surface (17) facing the catch (2) in the upper part of the operating lever (3) and a corresponding counter surface (21) of the upper opening, and
- a support surface (7) opposite to the catch (2) in the upper part of the operating lever (3) and the corresponding counter surface (33') of the upper opening, and in which
the said support surfaces (7, 17) of the operating lever (3), together with their counter surfaces (33', 21) in the housing, are arranged to create the force locking of the catch (2), in order to cancel the opening force (F_{L}) created by the coupler ball (11), **characterized in that** connected to the operating lever (3) are locking surfaces (7, 17; 6, 38) that prevent its rotation in the locked position and that the said support surface (7) opposite to the catch of the operating lever (3) is elongated, permitting the operating lever (3) a small degree of opening in the actual opening direction, thereby still taking up the opening force (F_{L}) of the aforesaid coupler ball (11).

2. Coupler jaw according to Claim 1, **characterized in that** the locking surfaces preventing the rotation of the operating lever (3) are formed of the said support surfaces (7, 17) of the operating lever (3), together with the counter surfaces (33', 21) of the housing.

3. Coupler jaw according to Claim 1, **characterized in that** the locking surfaces preventing the rotation of the operating lever (3) are formed by the pivot (6) between the catch (2) and the operating lever (3) and a surface (38) cooperating with a surface (39) on the catch limiting their mutual rotation.

4. Coupler jaw according to any of Claims 1 - 3, **characterized in that** the locking surface (20) of the catch (2), together with the nearby areas, are essentially curved, in order to permit the rotation of the catch (2) around a point belonging to the top support surface (13) of the opening, in the initial stage of opening.

5. Coupler jaw according to any of Claims 1 - 4, **characterized in that**, a bottom support surface (23) of the opening, and a bottom surface (20.1) of the catch (2) near to its locking surface (20), that slides against it, make contact in the automatic locking stage, i.e. when the coupler ball (11) presses against the opening surface (12) of the catch (2) the catch (2) moves a distance downwards, until the botton surface (20.1) of the catch makes contact with the bottom support surface (23) of the opening.

6. Coupler jaw according to Claim 5, **characterized in that** the housing includes a support surface (4') opposite to the bottom part of the catch (2), at a distance from the opening, around which the catch (2) rotates at the start of the automatic locking stage, before the catch (2) comes into contact with the said bottom support surface (23) of the opening and begins to rotate around the said point.

7. Coupler jaw according to any of Claims 1 - 6, **characterized in that** the spring (8) is attached to the operating lever (3).

8. Coupler jaw according to any of Claims 1 - 7, **characterized in that** the operating lever (3) is arranged to be raised to an upper position by raising a locking surface (36) located on its lower part on top of the counter surface (33') of the housing.

9. Coupler jaw according to any of Claims 1 - 8, **characterized in that** the pivot (6) end of the catch (2) is formed by lugs (2.1) into a forked shape, the operating lever (3) rotating between these lugs (2.1).

10. Coupler jaw according to any Claims 1 - 9, **characterized in that** the said elongated support surface (7) opposite to the catch of the operating lever (3) corresponds to preferably more than 30 % and generally at least 15 % on the opening travel required by the operating lever (3) to release the coupler ball.

## Patentansprüche

1. Für die Dreipunktaufhängung eines Schleppers, speziell für einen Unterlenker bestimmter Fanghaken, der ein Kupplungsmaul (27), ein Gehäuse (25), ein Sperrglied (2) und eine Feder (8), die das Sperrglied (2) in Richtung Verriegelungsstellung zieht, und einen Betätigungshebel (3), der teilweise aus der oberen Öffnung des Gehäuses (25) hervorsteht, umfasst, und der die Kupplungskugel (11) eines Arbeitsgeräts oder dergleichen in sein Kupplungsmaul (27) aufnimmt und es mit dem besagten Sperrglied (2) verriegelt, das sich durch eine Öffnung des Gehäuses (25) in das Kupplungsmaul erstreckt und sich, drückt (Kraft Fo) die Kupplungskugel (11) gegen die Öffnungsfläche (12) des aus der Öffnung des Gehäuses (25) herausragenden Sperrgliedes (2), in das Gehäuse (25) hineinschieben kann, sich in Verriegelungssituation aber durch die Wirkung der Tangentialkraft (FL) der im Kupplungsmaul (27) befindlichen Kupplungskugel (27) nicht zu öffnen vermag, wobei das Sperrglied (2) mit dem Betätigungshebel (3) manuell geöffnet werden kann und das Sperrglied (2) und der daran angelenkte Betätigungshebel (3) relativ zum Gehäuse (25) mit Hilfe funktionaler Flächen, nämlich in Verriegelungsstellung:
- einer in das Kupplungsmaul (27) weisenden, gegen die Kugel (11) gerichteten, am Sperrglied ausgebildeten Sperrfläche (20), und
- einer oberen Stützfläche (13) an der Gehäuseöffnung und einer gleitenden oberen Fläche (14) des Sperrgliedes (2), und
- einer am Oberteil des Betätigungshebels (3) befindlichen sperrgliedseitigen (2) Stützfläche (17) und einer dieser entsprechenden Gegenfläche (21) an der oberen Öffnung, und
- einer am Oberteil des Betätigungshebels (3) dem Sperrglied (2) entgegengesetzten Stützfläche (7) und der entsprechenden Gegenfläche (33') der oberen Öffnung wirken, wobei
die besagten Stützflächen (7, 17) des Betätigungshebels (3) zusammen mit ihren Gegenflächen (33', 21) am Gehäuse dazu eingerichtet sind, zur Aufhebung der von der Kupplungskugel (11) bewirkten Öffnungskraft (FL) eine das Sperrglied (2) verriegelnde Kraft zu bewirken, **dadurch gekennzeichnet, dass** in Verbindung mit dem Betätigungshebel (3) in Verriegelungsstellung dessen Drehbewegung verhindernde Sperrflächen (7, 17; 6, 38) vorhanden sind, und dass die besagte zum Sperrglied (2) entgegengesetzte Stützfläche (7) des Betätigungshebels (3) länglich geformt ist und ein geringfügiges Öffnen des Betätigungshebels (3) in der eigentlichen Öffnungsrichtung zulässt und so die Öffnungskraft (FL) der vorgenannten Kupplungskugel (11) aufhebt.

2. Fanghaken nach Anspruch 1, **dadurch gekennzeichnet, dass** die das Drehen des Betätigungshebels (3) verhindernden Sperrflächen aus den besagten Stützflächen (7, 17) des Betätigungshebels (3) zusammen mit den Gegenflächen (33', 21) am Gehäuse bestehen.

3. Fanghaken nach Anspruch 1, **dadurch gekennzeichnet, dass** die das Drehen des Betätigungshebels (3) verhindernden Sperrflächen aus dem Gelenk (6) zwischen dem Sperrglied (2) und dem Betätigungshebel (3) und einer deren gegenseitiges Drehen begrenzenden Fläche (38), die mit einer Sperrgliedfläche (39) zusammenwirkt, bestehen.

4. Fanghaken nach irgendeinem der Ansprüche 1 bis 3, **dadurch gekennzeichnet, dass** die Sperrfläche (20) des Sperrgliedes (2) einschließlich ihres Nahbereichs wesentlich gekrümmte Form hat um in der Anfangsphase des Öffnens ein Drehen des Sperrgliedes (2) um einen zur oberen Stützfläche (13) gehörenden Punkt zu ermöglichen.

5. Fanghaken nach irgendeinem der Ansprüche 1 bis 4, **dadurch gekennzeichnet, dass** eine untere Stützfläche (23) der Öffnung und eine gegen diese gleitende untere Fläche (20.1) des Sperrgliedes (2) in der Nähe der Sperrfläche (20) in der automatischen Verriegelungsphase in Kontakt treten, d.h. wenn die Kugel (11) gegen die Öffnungsfläche (12) des Sperrglieds (2) drückt, das Sperrglied (2) sich ein Stück nach unten bewegt bis die untere Fläche (20.1) des Sperrgliedes in Kontakt zur unteren Stützfläche (23) der Öffnung gelangt.

6. Fanghaken nach Anspruch 5, **dadurch gekennzeichnet, dass** das Gehäuse in einem Abstand von der Öffnung eine der Unterseite des Sperrgliedes (2) gegenüberliegende Stützfläche (4') hat, um die sich das Sperrglied (27) zu Beginn der automatischen Verriegelungsphase dreht bevor das Sperrglied (2) mit der besagten unteren Stützfläche (23) der Öffnung in Berührung kommt und sich um den besagten Punkt zu drehen beginnt.

7. Fanghaken nach irgendeinem der Ansprüche 1 bis 6, **dadurch gekennzeichnet, dass** die Feder (8) mit dem Betätigungshebel (3) verbunden ist.

8. Fanghaken nach irgendeinem der Ansprüche 1 bis 7, **dadurch gekennzeichnet, dass** das Stellen des Betätigungshebels (3) in Hochstellung durch Heben der an seinem Unterteil ausgebildeten Sperrfläche (36) gegen die Gegenfläche (33') des Gehäuses erfolgt.

9. Fanghaken nach irgendeinem der Ansprüche 1 bis 8, **dadurch gekennzeichnet, dass** das gelenkseitige (6) Ende des Sperrgliedes (2) durch Ansätze (2.1) gabelförmig ausgebildet ist und der Betätigungshebel (3) sich zwischen diesen Ansätzen (2.1) dreht.

10. Fanghaken nach irgendeinem der Ansprüche 1 bis 9, **dadurch gekennzeichnet, dass** die besagte am Betätigungshebel (3) ausgebildete, dem Sperrglied entgegengesetzte langgestreckte Stützfläche (7) bevorzugt über 30 % und im Allgemeinen wenigstens 15 % des zur Freigabe der Kupplungskugel erforderlichen Öffnungsweges des Betätigungshebels (3) entspricht.

## Revendications

1. Mâchoire d'attelage prévue pour l'attelage trois points d'un tracteur, spécialement pour la barre d'attelage, mâchoire d'attelage comprenant une gorge d'attelage (27), un logement (25), un arrêt (2) et un ressort (8) disposé de sorte à tirer l'arrêt (2) vers la position verrouillée ainsi qu'un levier de manoeuvre (3), qui dépasse partiellement d'une ouverture supérieure du logement (25), et laquelle mâchoire d'attelage fixe la boule d'attelage (11) d'un outil ou d'un appareil similaire dans sa gorge d'attelage (27) et la verrouille à l'aide dudit arrêt (2), qui s'étend de l'ouverture du logement (25) à la gorge d'attelage et qui peut être poussé à l'intérieur du logement (25) quand la boule d'attelage (11) appuie (force F_{O}) la surface d'ouverture (12) de l'arrêt (2) qui dépasse de l'ouverture du logement, mais dans laquelle l'arrêt dans la situation de verrouillage est empêché de s'ouvrir par l'effet de la force tangentielle (F_{L}) de la boule d'attelage (11) dans la gorge d'attelage (27), et dans laquelle l'arrêt (2) est disposé de sorte à s'ouvrir manuellement à l'aide du levier de manoeuvre (3), et dans laquelle l'arrêt (2) et le levier de manoeuvre (3), qui y sont liés par un pivot, fonctionnent par rapport au logement (25) à l'aide de surfaces opérationnelles, qui, dans la position verrouillée, sont
- une surface de verrouillage (20) contre la boule (11) du côté de l'arrêt qui fait face à la gorge d'attelage (27), et
- une surface de soutien (13) du côté supérieur de l'ouverture du logement et une surface supérieure (14) glissante de l'arrêt (2), et
- une surface de soutien (17) en face de l'arrêt (2) dans la partie supérieure du levier de manoeuvre (3) et une contre-surface (21) correspondante de l'ouverture supérieure, et
- une surface de soutien (7) opposée à l'arrêt (2) dans la partie supérieure du levier de manoeuvre (3) et une contre-surface (33') correspondante de l'ouverture supérieure, et dans laquelle
lesdites surfaces de support (7, 17) du levier de manoeuvre (3) ensemble avec leurs contre-surfaces (33', 21) dans le logement sont disposées de sorte à former le verrouillage forcé de l'arrêt (2) pour annuler la force d'ouverture (F_{L}) créée par ladite boule d'attelage (11), **caractérisée en ce qu'**en liaison avec le levier de manoeuvre (3) il y a des surfaces de verrouillage (7, 17 ; 6, 38) qui empêchent sa rotation dans la position verrouillée et que ladite surface de soutien (7) opposée à l'arrêt du levier de manoeuvre (3) est prolongée, permettant au levier de manoeuvre (3) un faible degré d'ouverture dans la direction d'ouverture effective, annulant ainsi toujours la force d'ouverture (F_{L}) de ladite boule d'attelage (11).

2. Mâchoire d'attelage selon la revendication 1, **caractérisée en ce que** les surfaces de verrouillage empêchant la rotation du levier de manoeuvre (3) sont formées desdites surfaces de soutien (7, 17) du levier de manoeuvre (3), ainsi que des contre-surfaces (33', 21) du logement.

3. Mâchoire d'attelage selon la revendication 1, **caractérisée en ce que** les surfaces de verrouillage empêchant la rotation du levier de manoeuvre (3) sont formées du pivot (6) entre l'arrêt (2) et le levier de manoeuvre (3) et d'une surface (38) limitant leur rotation mutuelle en coopération avec une surface (39) de l'arrêt.

4. Mâchoire d'attelage selon l'une quelconque des revendications 1 à 3, **caractérisée en ce que** la surface de verrouillage (20) de l'arrêt (2) ainsi que les zones avoisinantes sont essentiellement courbes pour permettre, au stade initial d'ouverture, la rotation de l'arrêt (2) autour d'un point faisant partie de la surface de soutien supérieure (13) de l'ouverture.

5. Mâchoire d'attelage selon l'une quelconque des revendications 1 à 4, **caractérisée en ce qu'**une surface de soutien inférieure (23) de l'ouverture et une surface inférieure (20.1) de l'arrêt (2) près de la surface de verrouillage (20), qui glisse contre celle-ci, font contact pendant le stade de verrouillage automatique, c'est-à-dire quand la boule d'attelage (11) presse contre la surface d'ouverture (12) de l'arrêt (2), l'arrêt (2) se déplace d'une certaine longueur vers le bas jusqu'à ce que la surface inférieure (20.1) de l'arrêt entre en contact avec la surface de soutien inférieure (23) de l'ouverture.

6. Mâchoire d'attelage selon la revendication 5, **caractérisée en ce que** le logement comprend une surface de soutien (4') opposée à la partie inférieure de l'arrêt (2), à une certaine distance de l'ouverture, autour de laquelle l'arrêt (2) tourne au début du stade de verrouillage automatique avant que l'arrêt (2) n'entre en contact avec ladite surface de soutien inférieure (23) de l'ouverture et ne commence à tourner autour dudit point.

7. Mâchoire d'attelage selon l'une quelconque des revendications 1 à 6, **caractérisée en ce que** le ressort (8) est attaché au levier de manoeuvre (3).

8. Mâchoire d'attelage selon l'une quelconque des revendications 1 à 7, **caractérisée en ce que** le levier de manoeuvre (3) est disposé de sorte à être soulevé à une position haute en soulevant une surface de verrouillage (36) qui se situe sur sa partie inférieure, sur la contre-surface (33') du logement.

9. Mâchoire d'attelage selon l'une quelconque des revendications 1 à 8, **caractérisée en ce que** l'extrémité de l'arrêt (2) où se trouve le pivot (6) est arrangée en forme de fourche par des oreilles (2.1), le levier de manoeuvre (3) pivotant entre ces oreilles (2.1).

10. Mâchoire d'attelage selon l'une quelconque des revendications 1 à 9, **caractérisée en ce que** ladite surface de soutien (7) prolongée opposée à l'arrêt du levier de manoeuvre (3) correspond de préférence à plus de 30 % et de manière générale à au moins 15 % de la course d'ouverture nécessaire au levier de manoeuvre (3) pour libérer la boule d'attelage.
